# Europäisches Patentamt

# European Patent Office

# Office européen des brevets

(11) Veröffentlichungsnummer: **0 113 796**

**B1**

(12)

# EUROPÄISCHE PATENTSCHRIFT

(45) Veröffentlichungstag der Patentschrift:
14.01.87

(51) Int. Cl.⁴: **C 01 F 7/34, B 01 J 21/04**

(21) Anmeldenummer: **83106997.6**

(22) Anmeldetag: **16.07.83**

(54) **Wasserhaltiges Aluminiumoxid enthaltend im wesentlichen Pseudoböhmit, Verfahren zu seiner Herstellung und Verwendung.**

(30) Priorität: **23.11.82 DE 3243193**

(43) Veröffentlichungstag der Anmeldung:
**25.07.84 Patentblatt 84/30**

(45) Bekanntmachung des Hinweises auf die Patenterteilung:
**14.01.87 Patentblatt 87/3**

(84) Benannte Vertragsstaaten:
**BE CH DE FR GB IT LI NL**

(56) Entgegenhaltungen:
**EP-A-0 085 592**
**DE-B-2 249 022**
**US-A-2 988 520**
**US-A-3 520 654**
**US-A-4 297 325**
**US-A-4 332 782**
**US-A-4 371 513**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft, Weissfrauenstrasse 9, D-6000 Frankfurt am Main 1 (DE)**

(72) Erfinder: **Liu, Anh Thu, Dr., Pfarrer Hufnagelstrasse 21, D-6450 Hanau 1 (DE)**
Erfinder: **Parr, Erfried, Sombornerstrasse 27, D-6458 Rodenbach (DE)**
Erfinder: **Kleinschmit, Peter, Dr., Wildaustrasse 19, D-6450 Hanau 9 (DE)**

LIBER, STOCKHOLM 1987

## Beschreibung

Pseudoböhmit ist eine Aluminiumoxidhydrat-Modifikation, die wegen ihrer grossen spezifischen Oberfläche, Porenbeschaffenheit, Dispergierbarkeit und ihres Bindevermögens vielfach als Katalysator, Katalysatorträger, Füllstoff und Bindemittel verwendet wird.

Es ist bekannt Pseudoböhmit aus Aluminiumsulfat-Lösung herzustellen (vgl. US-A 4,297,325, US-A 4,154,812, DE-B 22 49 022).

Bei diesen Verfahren sind entweder lange Wasch- bzw. Alterungszeiten notwendig oder man erhält kein gelierbares Produkt, d.h. der Peptisierungsindex ist > 60 Minuten.

Gegenstand der Erfindung ist ein wasserhaltiges Aluminiumoxid, enthaltend im wesentlichen Pseudoböhmit, welches dadurch gekennzeichnet ist, daß es weniger als 400 ppm, vorzugsweise weniger als 200 ppm Natriumoxid und weniger als 2 Gew.-%, vorzugsweise weniger als 1 Gew.-% Sulfat, berechnet als $SO_4$ enthält, sowie einen Peptisierungsindex von weniger als 60 Minuten, weniger vorzugsweise als 10 Minuten und eine spezifische Oberfläche von 200 bis 400 $m^2$/g aufweist.

Der Gehalt an Natriumoxid wird mittels bekannten Analysenmethoden, wie z.B. Atomabsorptionsspektroskopie bestimmt.

Der Gehalt an Sulfat wird mittels bekannten Analysenmethoden, wie z.B. gravimetrische Bestimmung über $BaSO_4$ bestimmt.

Der Peptisierungsgrad wird nach der Methode gemäß US-A-4,297,325 bestimmt.

Die spezifische Oberfläche wird am Areameter nach der bekannten Methode gemäß DIN 66 132 bestimmt.

Ein weiterer Gegenstand der Erfindung ist ein Verfahren zur Herstellung des wasserhaltigen Aluminiumoxids, enthaltend im wesentlichen Pseudoböhmit, welches weniger als 400 ppm, vorzugsweise weniger als 200 ppm Natriumoxid und weniger als 2 Gew.-%, vorzugsweise weniger als 1 Gew.-% Sulfat, berechnet als $SO_4$ enthält sowie einen Peptisierungsindex von weniger als 60 Minuten, vorzugsweise weniger als 10 und eine spezifische Oberfläche von 200 bis 400 $m^2$/g aufweist, welches dadurch gekennzeichnet ist, daß man zum einen wässrige Aluminiumsulfat-Lösung mit einem pH-Wert von 3,0 bis 2,6, vorzugsweise 2,8 und einem $Al_2O_3$-Gehalt von 70 bis 105 g/l (5,8 bis 8,0 Gew.-%) auf eine Temperatur von 50 bis 90°C, vorzugsweise 60°C erwärmt, zum anderen wässrige Natriumaluminat-Lösung mit einem Gehalt von 120 bis 265 g/l $Na_2O$ (10 bis 18,8 Gew.-%) und 70 bis 225 g/l $Al_2O_3$ (5,9 bis 15,9 Gew.-%), vorzugsweise 220 g/l $Na_2O$ (16,3 Gew.-%) und 160 g/l $Al_2O_3$ (11,9 Gew.-%) auf eine Temperatur von 50 bis 90°C, vorzugsweise 60°C erwärmt, anschliessend beide Lösungen gleichzeitig in eine Vorlage von Wasser mit einer Temperatur von 50 bis 90°C, vorzugsweise 60°C derart einfliessen läßt, daß die Reaktionsmischung während der Fällung einen konstanten pH-Wert von weniger als 5, vorzugsweise weniger als 4, aufweist, nach der Fällung durch weitere Zugabe von Natriumaluminatlauge derselben Konzentration den pH-Wert der Reaktionsmischung in den alkalischen Bereich, vorzugsweise grösser als 8, verschiebt, die Reaktionsmischung einer Alterung von 3,1 bis 20 Stunden, vorzugsweise 5 bis 18 Stunden bei einer Temperatur von 50 bis 90°C, vorzugsweise 80°C, und bei einem pH-Wert von 8,5 bis 10 unterzieht, den Niederschlag abfiltriert, wäscht, trocknet und gegebenenfalls einen Ionenaustausch unterwirft.

Die Aluminiumsulfat- und Natriumaluminatlösungen können durch Auflösen der entsprechenden Salze hergestellt werden.

Die Aluminiumsulfat-Lösung kann weiterhin durch Umsetzung von Aluminiumoxid mit Schwefelsäure und die Natriumaluminat-Lösung durch Umsetzung mit Natronlauge hergestellt werden.

Als Aluminiumoxid können eingesetzt werden:

z.B. Leichthydrat (58,5 - 65 Gew.-% $Al_2O_3$), Pseudoböhmit und insbesondere Feuchthydrat (57 - 58 Gew.-% $Al_2O_3$).

In einer vorzugsweisen Ausführungsform der Erfindung wird die Alterung des Fällungsproduktes bei einem pH-Wert von 8,5 bis 9 durchgeführt.

Das erfindungsgemäße Aluminiumoxid weist vorteilhafterweise einen geringen Gehalt an $Na_2O$ auf. Trotz der relativ kurzen Alterungszeit ist das Geliervermögen sehr hoch.

Das erfindungsgemäße Verfahren weist die folgenden Vorteile auf:

## Beispiele

Bei den in der Tabelle 1 aufgeführten Beispiele 1 bis 8 wird ausgehend von einem technischen Feuchthydrat mit einem Gehalt von 57,5 Gew.-% $Al_2O_3$ mit wässriger Schwefelsäure eine Aluminiumsulfat-Lösung mit einem PH-Wert von 2,8 und einem Gehalt von 75-97 g/l $Al_2O_3$ hergestellt.

Eine Natriumaluminatlösung mit einem Gehalt von 220 g/l $Na_2O$ und 160 g/l $Al_2O_3$ wird ausgehend von demselben technischen Feuchthydrat durch Umsetzung mit Natriumhydroxid hergestellt. Beide Lösungen werden auf die Fällungstemperatur erwärmt und gleichzeitig in eine wässrige Vorlage, die dieselbe Temperatur aufweist, gegeben. Der gewünschte PH-Wert wird während der Fällung konstant gehalten.

Die erhaltene Fällungssuspension wird unter konstanten Bedingungen einer Alterung unterworfen.

Das erhaltene Produkt wird abfiltriert und mit Wasser gewaschen.

Bei den Beispielen 1 bis 6 wird der Filterkuchen mit Wasser zu einer Suspension mit einem Gehalt von 11 Gew.-% $Al_2O_3$ redispergiert und die Suspension bei 380°C sprühgetrocknet.

2

Bei den Beispielen 7 und 8 wird der Filterkuchen 4-5 Stunden bei 105°C getrocknet und anschliessend mittels einer Stiftmühle gemahlen.

Die wesentlichen Parameter sowie die ermittelten Produktdaten sind in der Tabelle 1 aufgeführt.

Die Beispiele 1, 4, 5, 6, 7 und 8 sind Vergleichbeispiele.

**Tabelle I**

| Beispiel | Fällung ph | Fällung °C | Alterung pH | Alterung °C | Alterung Std. | Produkt Na$_2$O % | Produkt SO$_4$ % | PI Min. | spezifische Oberfläche m²/g |
|---|---|---|---|---|---|---|---|---|---|
| 1 | 4 | 80 | 8,5 | 80 | 18 | 0,0032 | 2,63 | 4 | 325 |
| 2 | 4 | 60 | 9,0 | 60 | 18 | 0,0038 | 1,3 | 3 | 295 |
| 3 | 4 | 60 | 9,0 | 80 | 18 | 0,0211 | 1,95 | 2 | 297 |
| 4 | 5 | 80 | 10,0 | 80 | 18 | 0,073 | <0,1 | 13 [1] | - |
| 5 | 6 | 80 | 10,0 | 80 | 18 | 0,057 | <0,1 | 1 | 296 |
| 6 | 4 | 80 | 10,0 | 80 | 20 | 0,63 | <0,1 | - | - |
| 7 | 4 | 80 | 10,0 | 80 | 18 | 0,21 | <0,1 | 5 [1] | - |
| 8 | 8 | 80 | 10,0 | 80 | 18 | 0,22 | <0,1 | - | - |
| 9 | 4 | 60 | 9,0 | 80 | 5 | 0,0083 | 0,49 | 9 | 228 |
| 10 | 4 | 60 | 9,0 | 80 | 5 | 0,0083 | 0,50 | 5 | 300 |

[1] Peptisierungsindex war nicht meßbar

Die rheologischen Eigenschaften von Pseudoböhmit werden durch den Peptisierungsindex (PI) gekennzeichnet, der nach der folgenden Testvorschrift ermittelt wird:

Eine 10-gewichtsprozentige Suspension (bezogen auf $Al_2O_3$) wird mit 90-Prozentiger Ameisensäure im Verhältnis 100:1 versetzt. Der Peptisierungsindex ist die Zeit in Minuten, die die angesäuerte Suspension benötigt, um eine Viskosität von mindestens 5,000 cps (5,000 Pas) zu erreichen.

Wegen seiner rheologischen Eigenschaften ist Pseudoböhmit ein vorzügliches Bindemittel. Es verleiht den verschiedenartigsten Endprodukten, wie FCC-Katalysatoren oder Schleifbändern die gewünschte Abriebfestigkeit. Als Maß für die Bindefähigkeit dient der Peptisierungsindex (PI), der nach der beschriebenen Standardvorschrift bestimmt wird. Danach bedeutet ein niedriger Index ein schnell peptisierbares Produkt mit gutem Bindevermögen.

Werden die Komponenten (Natriumaluminatlauge/Aluminiumsulfat) gleichzeitig in eine Wasservorlage zugegeben, so bestimmt das Zuflußverhältnis den PH-Wert der Produktsuspension. Ein Vergleich der Beispiele zeigt die Auswirkung dieses Fällungs-PH-Wertes auf die Peptifierbarkeit des Produktes: Unter sonst gleichen Bedingungen haben die bei PH 4 gefällten Pseudoböhmitproben die beste Peptisierbarkeit (PI = 1 Min.). Diese fällt immer weiter ab, je höher der PH-Wert für die Fällung gewählt wird.

Da bekanntlich hohe Temperaturen die Bildung von Aluminiumoxidtrihydraten in stark alkalischen Medien beschleunigen, wird bei den Fällung darauf geachtet, daß sich der PH-Wert der Suspension steigend bis zum gewünschten Endwert einstellt. Dadurch wird in allen Versuchen reiner Pseudoböhmit erhalten. Je nach Versuchsbedingungen (PH, Temperatur, Alterungszeit) unterscheiden sich die Proben lediglich durch den Grad der Kristallinität, speziell durch die Kristallitgröße, die sich röntgenographisch ermitteln läßt.

Die spezifischen Oberflächen wurden am Areameter bestimmt, nachdem die Proben über Nach bei 100°C getrocknet und anschließend 20 Minuten bei 150°C mit Stickstoff gespült wurden. (DIN 66 132)

Nach der Fällung wird unter Zusatz von Natriumaluminat die Suspension bei verschiedenen pH-Werten gealtert. Es konnte eine eindeutige Abstufung festgestellt werden:

- PH = 8: Alle Versuche haben zu nicht-peptisierbaren Produkten geführt.
- PH = 8,5-9,0: Die Peptisierbarkeit des Pseudoböhmits wird nur durch stützende Faktoren (hohe Temperaturen, strenges Einhalten der Fällungsbedingungen) erzwungen.
- PH = 9,5-10,0: In diesem Bereich wird Pseudoböhmit mit den gewünschten rheologischen Eigenschaften erhalten.

In Pseudoböhmit verursacht Natrium als Verunreinigung unerwünschte Störeffekte bei vielen katalytischen Reaktionen. Als Trägermaterial muß der Pseudoböhmit daher eine hohe Reinheit besitzen. Nun liegt der isoelektrische Punkt für Pseudoböhmit bekanntlich bei PH ~ 9,5. In stärker alkalischen Bereichen adsorbiert das Material in immer bedeutenderem Ausmaß Natriumionen aus der Lösung.

Die Ergebnisse der chemischen Analyse bestätigen, daß nach Alterung in stärkeren alkalischen Medien (pH $\geqslant$ 9,5) das Pseudoböhmitprodukt durchwegs einen relativ hohen $Na_2O$-Gehalt aufweist.

Bei der Diskussion über die rheologischen Eigenschaften wurde bereits festgestellt, daß auch im pH-Bereich 8,5-9,0 peptisierbare Produkte unter streng kontrollierten Bedingungen hergestellt werden können. Durch Wahl der passenden Randbedingungen ist es uns auch tatsächlich gelungen, natriumarme und gleichzeitig leicht dispergierbare Pseudoböhmite zu produzieren.

## Vergleichsbeispiel 1

Es wird das Beispiel gemäß US-A 4 154 812, Spalten 29, 30 und 31 nachgestellt. Die Konzentration der $Al_2(SO_4)_3$-Lösung ist ca. 8 Gew.-% (als $Al_2O_3$).

Die Konzentration der Natriumaluminatlauge (d = 1,46 g/cm³) ist 336 g $Na_2O$/1 und 236 g $Al_2O_3$/1, andere ausgedrückt: 23 Gew.-% $Na_2O$ und 16,2 Gew.-% $Al_2O_3$.

In einem 5 l-Rundhalskolben wird 1,6 l Wasser bei 70°C vorgelegt und 2,5 ml der Aluminiumsulfatlösung dazugegeben; der pH-Wert dieser Mischung wird dabei auf 3,1 gesenkt.

Fünf Minuten nach dieser Animpfung werden die auf 65°C vorgewärmten Aluminiumsulfat- und Natriumaluminatlösungen gleichzeitig in der Weise zudosiert, daß der pH-Wert der Suspension bei 7,4 konstant bleibt. Die Temperatur der Mischung wird während der gesamten Reaktion bei 75°C gehalten. Nach einem Verbrauch von 0,9 l wird der Zufluß von Aluminiumsulfat unterbrochen und der pH-Endwert durch Zusatz von weiteren 50 ml Aluminatlauge innerhalb einer Minute auf pH 10 eingestellt. Der Gesamtverbrauch an Aluminatlauge liegt bei 600 ml.

Nach Erreichen des pH-Endwertes wird die Suspension bei der gleichen Temperatur (75 °C) 30 Minuten lang weiter gerührt, danach heiß abgenutscht und sulfatfrei gewaschen.

Die Ergebnisse werden in Tabelle 2 ersichtlich.

# 0 113 796

**Vergleichsbeispiel 2**

Es wird gemäß den Ansprüchen der DE-B 22 49 022 gearbeitet: Die Konzentration der $Al_2(SO_4)$-Lösung ist 97,0 g $Al_2O_3$/l Die Konzentration der Natriumaluminatlauge ist 166,6 g $Al_2O_3$/l und 241,7 g $Na_2O$/l.

In einem 2 m³-Fällbehälter werden 810 l Wasser (80°C) vorgelegt und 600 l der auf 80°C vorgeheizten Aluminiumsulfatlösung zudosiert. Mit 500 l $NaAlO_2$ (80°C) wird der pH-Wert der Suspension auf pH 10 eingestellt. Nach 2 Stunden Alterungszeit bei gleicher Temperatur (80°C) wird die Suspension filtriert und sulfatfrei gewaschen. Das Produkt wird wie üblich aufgearbeitet und getestet. Die Ergebnisse werden in Tabelle 2 zusammengefaßt.

## Tabelle 2

| Versuchs-Nr. | Füllung pH | Füllung Temp. (°C) | Alterung pH | Alterung Temp. (°C) | Alterung Zeit (Std.) | chem. Anal. $Na_2O$ (G%) | chem. Anal. $SO_4$ (G%) | PI (Min.) |
|---|---|---|---|---|---|---|---|---|
| 1 | sauer ↑9,5 | 80 | 9,5 | 80 | 2 | 0,22 | <0,1 | >60 ① |
| 2 | 7,4 | 75 | 10 | 75 | 0,5 | 0,0178 | <0,05 | >60 ① |

① Die angesäuerte Pseudoböhmitsuspension zeigte keine Viskositätserhöhung nach 60 Minuten.

5

**Patentansprüche**

1. Wasserhaltiges Aluminiumoxid, enthaltend im wesentlichen Pseudobõhmit, <u>dadurch gekennzeichnet,</u> daß es weniger als 400 ppm, vorzugsweise weniger als 200 ppm Natriumoxid und weniger als 2 Gew.-%, vorzugsweise weniger als 1 Gew.-% Sulfat, berechnet als $SO_4$ enthält, sowie einen Peptisierungsindex von weniger als 60 Minuten und eine spezifische Oberfläche von 200 bis 400 $m^2/g$ aufweist.

2. Verfahren zur Herstellung des wasserhaltigen Aluminiumoxides, enthaltend im wesentlichen Pseudobõhmit, welches weniger als 400 ppm, vorzugsweise weniger als 200 ppm Natriumoxid und weniger als 2 Gew.-%, vorzugsweise weniger als 1 Gew.-% Sulfat berechnet als $SO_4$ enthält, sowie einen Peptisierungsindex von weniger als 60 Minuten und eine spezifische Oberfläche von 200 bis 400 $m^2/g$ aufweist, gemäß Anspruch 1, <u>dadurch gekennzeichnet</u> daß man zum einen wässrige Aluminiumsulfat-Lösung mit einem pH-Wert von 3,0 bis 2,6 und einem $Al_2O_3$-Gehalt von 70 bis 105 g/l (5,8 bis 8,0 Gew.-%) auf eine Temperatur von 50 bis 90°C erwärmt, zum anderen wässrige Natriumaluminat-Lösung mit einem Gehalt von 120 bis 265 g/l $Na_2O$ (10 bis 18,8 Gew.-%) und 70 bis 225 g/l $Al_2O_3$ (5,9 bis 15,9 Gew.-%) auf eine Temperatur von 50 bis 90°C erwärmt, anschliessend beide Lösungen gleichzeitig in eine Vorlage von Wasser mit einer Temperatur von 50 bis 90°C derart einfliessen läßt, daß die Reaktionsmischung während der Fällung einen konstanten pH-Wert von weniger als 5 aufweist, nach der Fällung durch weitere Zugabe von Natriumaluminatlauge derselben Konzentration den pH-Wert der Reaktionsmischung in den alkalischen Bereich verschiebt, die Reaktionsmischung einer Alterung von 3,1 bis 20 Stunden bei einer Temperatur von 50 bis 90°C und bei einem pH-Wert von 8,5 bis 10 unterzieht, den Niederschlag abfiltriert, trocknet und gegebenenfalls einem Ionenaustausch unterwirft.

**Claims**

1. Hydrous aluminium oxide essentially containing pseudoboehmite, characterised in that it contains less than 400 ppm, preferably less than 200 ppm of sodium oxide and less than 2% by weight, preferably less than 1% by weight of sulphate, calculated as $SO_4$, and has a peptization index of less than 60 minutes and a specific surface area of from 200 to 400 $m^2/g$.

2. A process for the production of the hydrous aluminium oxide essentially containing pseudoboehmite, which contains less than 400 ppm, preferably less than 200 ppm of sodium oxide and less than 2% by weight, preferably less than 1% by weight of sulphate, calculated as $SO_4$, and has a peptization index of less than 60 minutes and a specific surface area of from 200 to 400 $m^2/g$, according to Claim 1, characterised in that, on the one hand, an aqueous aluminium sulphate solution having a pH of from 3.0 to 2.6 and an $Al_2O_3$-content of from 70 to 105 g/l (from 5.8 to 8.0% by weight) is heated to a temperature of from 50 to 90°C and, on the other hand, aqueous sodium aluminate solution with a content of from 120 to 265 g/l of $Na_2O$ (from 10 to 18.8% by weight) and from 70 to 225 g/l of $Al_2O_3$ (5.9 to 15.9% by weight) is heated to a temperature of from 50 to 90°C, both solutions are then allowed to flow simultaneously into a water receiver having a temperature of from 50 to 90°C in such a way that the reaction mixture has a constant pH of less than 5 during precipitation, the pH of the reaction mixture is moved into the alkaline range after precipitation by further addition of sodium aluminate liquor having the same concentration, the reaction mixture is subjected to an ageing treatment for from 3.1 to 20 hours at a temperature of from 50 to 90°C and at a pH of from 8.5 to 10, the precipitate is filtered, dried and optionally subjected to an ion exchange treatment.

**Revendications**

1°) Oxyde d'aluminium hydraté, composé essentiellement de pseudoboéhmite, caractérisé en ce qu'il contient moins de 400 ppm, de préférence moins de 200 ppm, d'oxyde de sodium et moins de 2 % en poids, de préférence moins de 1 % én poids, de sulfate, calculé en tant que $SO_4$, et qui présente un indice de peptisation inférieur à 60 minutes et une surface spécifique de 200 à 400 $m^2/g$.

2°) Procédé pour la préparation de l'oxyde d'aluminium hydraté, composé essentiellement de pseudoboéhmite, qui contient moins de 400 ppm, de préférence moins de 200 ppm d'oxyde de sodium et moins de 2 % en poids, de préférence moins de 1 % en poids, de sulfate, calculé en tant que $SO_4$, et qui présente un indice de peptisation inférieur à 60 minutes, et une surface spécifique de 200 à 400 $m^2/g$ selon la revendication 1, qui est caractérisé en ce que, d'une part, on chauffe a une température de 50 à 90°C, une solution aqueuse de sulfate d'aluminium ayant un pH de 3,0 à 2,6 et une teneur en $Al_2O_3$ allant de 70 à 105 g/l (5,8 à 8,0 % en poids), d'autre part, on chauffe à une température de 50 à 90°C une solution aqueuse d'aluminate de sodium ayant une teneur en $Na_2O$ de 120 à 265 g/l (10 à 18,8 % en poids) et de 70 à 225 g/l en $Al_2O_3$ (5,9 à 15,9 % en poids), on fait s'écouler ensuite simultanément les deux solutions dans un récipient contenant déjà de l'eau à une température de 50 à 90°C, de manière telle que le mélange reactionnel présente au cours de la précipitation un pH constant inférieur à 5, on amène le pH de mélange réactionnel, après la précipitation, dans la région alcaline, par nouvelle addition de solution d'aluminate de sodium à la même

6

concentration, on soumet le mélange réactionnel à un vieillissement de 3,1 à 20 heures, à une température de 50 à 90°C et à un pH de 8,5 à 10, on sépare le dépôt par filtration, on le lave, on le sèche et on le soumet éventuellement à un echange ionique.